# EUROPEAN PATENT SPECIFICATION

(11) **EP 3 722 160 B1**
(45) Date of publication and mention of the grant of the patent: **17.11.2021**
(21) Application number: 18889000.8
(22) Date of filing: 11.12.2018
(51) Int. Cl.: B60R 19/34, B60R 19/24, F16F 7/00, F16F 7/12, B60R 19/18, B60R 19/30

(54) **SHOCK ABSORBING STRUCTURE FOR VEHICLES**
STOSSDÄMPFUNGSSTRUKTUR FÜR FAHRZEUGE
STRUCTURE D'ABSORPTION DES CHOCS POUR VÉHICULES

(30) Priority: 14.12.2017 JP 2017239878
(43) Date of publication of application: 14.10.2020
(73) Proprietor: MAZDA MOTOR CORPORATION, Fuchu-cho, Aki-gun Hiroshima 730-8670 (JP)
(72) Inventor: KAWAMURA, Chikara, Aki-gun, Hiroshima 730-8670 (JP); NISHIHARA, Tsuyoshi, Aki-gun, Hiroshima 730-8670 (JP); ISHIKURA, Kazutaka, Aki-gun, Hiroshima 730-8670 (JP); TAKESHITA, Hiroaki, Aki-gun, Hiroshima 730-8670 (JP); SHIMANAKA, Tsuneki, Aki-gun, Hiroshima 730-8670 (JP); YOTSUYANAGI, Taiki, Aki-gun, Hiroshima 730-8670 (JP); MURAKAMI, Yoshiaki, Aki-gun, Hiroshima 730-8670 (JP)
(74) Representative: Behr, Wolfgang
(86) International application number: PCT/JP2018/045391
(87) International publication number: WO 2019/117110

(56) References cited:
- EP-A1- 3 006 271
- JP-A- H1 163 360
- JP-A- H1 163 360
- JP-A- 2009 234 377
- JP-A- 2009 234 377
- JP-A- 2011 080 542
- JP-A- 2012 126 217
- JP-A- 2012 126 217
- JP-A- 2015 145 240
- JP-A- 2016 010 982
- JP-A- 2016 010 982

## Description

### TECHNICAL FIELD

The present invention relates to an impact absorbing structure for a vehicle including a frame member formed of a resin material.

### BACKGROUND ART

Conventionally, there is known an impact absorbing structure for absorbing an impact applied to a front portion or a rear portion of a vehicle at a time of collision by using a compressiondeformable buffer member (hereinafter, also referred to as a crash can). The crash can is mounted between a bumper reinforcement extending in a vehicle width direction along a front end surface or a rear end surface of the vehicle, and distal ends of a pair of left and right side frames extending from a passenger compartment side toward the bumper reinforcement.

Generally, the crash can is formed of a metal material. By compressing and destroying the crash can in an axis direction at a time of vehicle collision, impact energy transmitted to a passenger compartment is absorbed.

Since the crash can is a relatively large component, an influence of the metal crash can on a weight of a vehicle body is non-negligible. In view of the above, as described in Patent Literature 1, forming a crash can (crash box) of a resin material such as CFRP has also been performed to reduce the weight of a vehicle body.

Further, it is desirable to standardize the crash can formed of resin such as CFRP regardless of a difference in vehicle type in an aspect of lowering a ratio of cost of a mold.

On the other hand, the height of a bumper reinforcement with respect to a colliding object differs depending on a vehicle type. Therefore, a colliding object may collide against a bumper reinforcement from an oblique direction inclined upward or downward with respect to a longitudinal direction (axis direction) of the crash can depending on a vehicle type.

Specifically, in a vehicle of a type in which a vehicle height is low such as a sports type vehicle, the height of a bumper reinforcement is low with respect to a colliding object. Therefore, the colliding object collides against the bumper reinforcement obliquely from upward. On the other hand, in a vehicle of a type in which a vehicle height is high such as an SUV, the height of a bumper reinforcement is high with respect to a colliding object. Therefore, the colliding object collides against the bumper reinforcement obliquely from downward.

When oblique collision from upward or oblique collision from downward as described above occurs, an impact load directing obliquely downward or obliquely upward is input to the crash can via the bumper reinforcement. Thus, a bending stress acting to bend the crash can upward or downward may be applied to an intermediate portion of the crash can in a longitudinal direction thereof (vehicle front-rear direction), and the crash can may be bent. When the crash can is bent, the crash can is not appropriately compressed and destroyed in the axis direction, and a sufficient impact absorbing effect may not be obtained.

The configuration of Japanese Unexamined Patent Application Publication No. JP 2009-274663 A mentions a measure of suppressing bending deformation, which occurs due to a bending stress acting on a base end (connecting portion to a side frame) of the crash can at a time of oblique collision from upward or oblique collision from downward. However, Patent Literature 1 does not mention bending deformation of an intermediate portion between the base end and a distal end (connecting portion to a bumper reinforcement) of the crash can. Thus, there is room for further investigation.

An impact absorbing structure for a vehicle according to the preamble of claim 1 is known from JP 2016 010982 A.

Other impact absorbing structures are known from JP 2012 126217 A , EP 3 006 271 A1 and JP 2009 234377 A.

### SUMMARY OF INVENTION

In view of the above-described circumstances, an object of the present invention is to provide an impact absorbing structure for a vehicle, which enables to, with use of a resin frame member as a buffer member (crash can), suppress bending of an intermediate portion of the frame member in a front-rear direction due to a bending stress acting at a time of oblique collision from upward or oblique collision from downward.

As a means for solving the above issue, the present invention is directed to an impact absorbing structure for a vehicle including a frame member formed of a resin material. The frame member includes a closed cross sectional portion extending in a vehicle front-rear direction, and a rib protruding at least either upward or downward from the closed cross sectional portion and extending in the vehicle front-rear direction. The frame member includes an inner frame member, and an outer frame member connected to the inner frame member from an outer side in a vehicle width direction. The inner frame member and the outer frame member have an identical shape to each other, and are formed to have a cross section orthogonal to the vehicle front-rear direction opened toward the outer side or an inner side in the vehicle width direction. The inner frame member and the outer frame member are connected in a posture that an opening portion of the inner frame member and an opening portion of the outer frame member face each other, whereby the frame member including the closed cross sectional portion and the rib is formed. Each of the inner frame member and the outer frame member includes a frame body opened toward the outer side or the inner side in the vehicle width direction, an upper flange protruding upward from an upper opening edge of the frame body, and a lower flange protruding downward from a lower opening edge of the frame body. The rib includes an upper rib formed by connecting the upper flange of the inner frame member and the upper flange of the outer frame member, and a lower rib formed by connecting the lower flange of the inner frame member and the lower flange of the outer frame member. Each of the upper flange and the lower flange includes a flange body protruding upward or downward from an opening edge of the frame body and extending in a front-rear direction, and a fastening portion protruding upward or downward from a part of the flange body in the front-rear direction. A through-hole for receiving a fastening member is formed in the fastening portion, and the through-hole is formed in such a way as not to span over a boundary between the flange body and the fastening portion.

### BRIEF DESCRIPTION OF DRAWINGS

FIG. 1 is a diagram illustrating an embodiment in which an impact absorbing structure according to the present invention is applied to a vehicle front portion, and is a perspective view illustrating essential parts including a crash can.
FIG. 2 is a plan view illustrating essential parts of the vehicle front portion.
FIG. 3 is an enlarged cross-sectional view taken along the line A-A in FIG. 2.
FIG. 4 is a right side view illustrating the crash can in a state that an outer frame member is removed.
FIG. 5 is a perspective view of an inner frame member.

### DESCRIPTION OF EMBODIMENTS

In the following, an embodiment according to the present invention is described in detail with reference to the drawings.

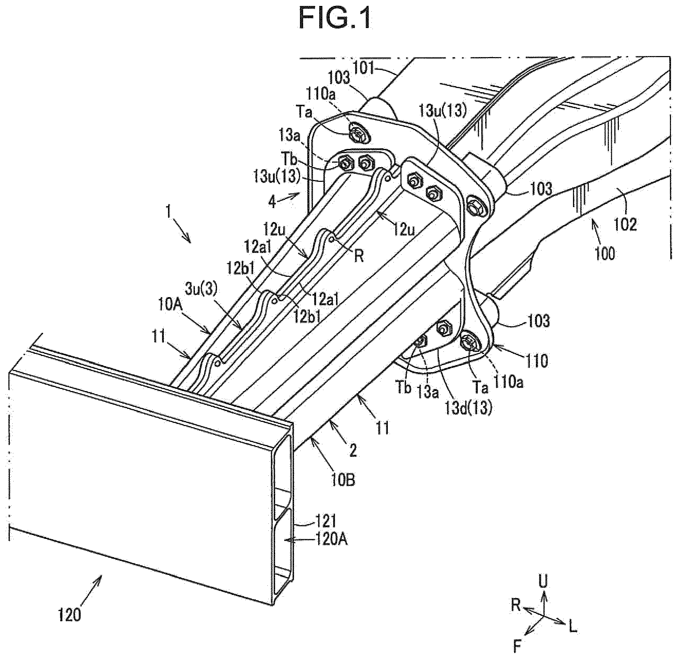

FIGS. 1 to 4 illustrate a preferred embodiment in a case where an impact absorbing structure according to the present invention is applied to a vehicle front portion. In the drawings, the arrow F indicates a vehicle front side, the arrow L indicates a vehicle left side, the arrow R indicates a vehicle right side, and the arrow U indicates a vehicle upper side. Since essential parts of a vehicle front portion according to the present embodiment are symmetrical in a left-right direction, in the following, only a configuration on the vehicle left side is described, unless otherwise specifically mentioned. In this case, the vehicle left side corresponds to an outer side in a vehicle width direction, and the vehicle right side corresponds to an inner side in the vehicle width direction.

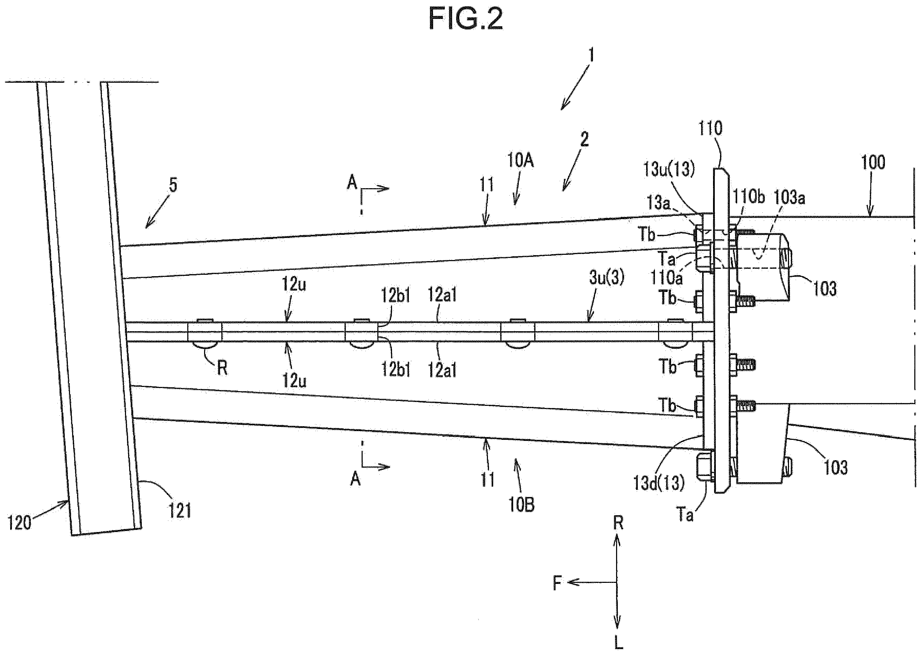

As illustrated in FIGS. 1 and 2, the vehicle front portion includes a pair of left and right front side frames 100 extending in the front-rear direction on left and right sides of an engine room, a pair of left and right crash cans 1 (corresponding to a "frame member" of the present invention) disposed in front of the front side frames 100, and a pair of left and right mounting plates 110 disposed between the front side frames 100 and the crash cans 1. The mounting plate 110 is fixedly fastened to a front end of the front side frame 100, and the crash can 1 is fixedly fastened to a front surface of the mounting plate 110. The crash can 1 is formed of carbon fiber reinforced resin (hereinafter, abbreviated as "CFRP").

A bumper reinforcement 120 extending in the vehicle width direction is formed on a front end of the vehicle. The bumper reinforcement 120 is mounted to connect front ends of the paired left and right crash cans 1 to each other.

As illustrated in FIGS. 1 and 2, the front side frame 100 is a vehicle body strength member including a closed cross section extending in a vehicle front-rear direction. The front side frame 100 includes a front side frame inner panel 101, and a front side frame outer panel 102 connected to the front side frame inner panel 101 from the outer side in the vehicle width direction. The front side frame inner panel 101 and the front side frame outer panel 102 include a pair of upper and lower flanges for connecting the two panels 101 and 102.

Bolt mounting portions 103 are formed on four corner portions (an upper portion and a lower portion of each of left and right side portions) at a front end of the front side frame 100. The bolt mounting portions 103 are formed to radially bulge from the corner portions of the front end of the front side frame 100. As illustrated in FIG. 2, a mounting hole 103a passing through in the vehicle front-rear direction is formed in each of the bolt mounting portions 103. Illustration of the bolt mounting portions 103 on the inner side in the vehicle width direction and on the lower side is omitted.

The mounting plate 110 includes a plurality of (four) mounting holes 110a (FIG. 2) passing through in the vehicle front-rear direction at positions corresponding to the mounting holes 103a of the bolt mounting portions 103 in a front view.

The mounting plate 110 is connected to a front end of the front side frame 100 by using a fastening member Ta including a bolt and a nut. Specifically, the mounting plate 110 is abutted against a front end of the front side frame 100, and in this state, a bolt is received in the mounting hole 110a of the mounting plate 110 and in the mounting hole 103a of the front side frame 100, and a nut is screwed with the bolt. Thus, the mounting plate 110 is connected to a front end of the front side frame 100 (see FIGS. 1 and 2).

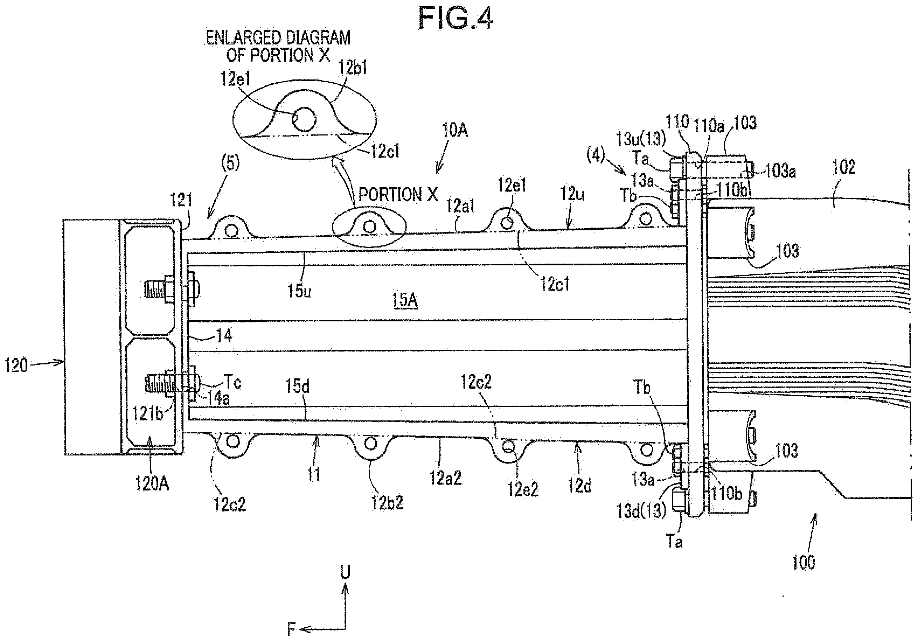

The bumper reinforcement 120 is a member for applying a predetermined strength to an unillustrated bumper. Both ends of the bumper reinforcement 120 in the vehicle width direction are respectively connected to the front side frames 100 via the crash cans 1. The bumper reinforcement 120 extends in the vehicle width direction while being moderately curved to protrude forward. A closed cross sectional space 120A is formed inside the bumper reinforcement 120 (see FIGS. 1 and 4).

As illustrated in FIGS. 1 to 3, the crash can 1 includes a closed cross sectional portion 2, a rib 3 (3u and 3d), a base-end-side mounting portion 4, and a distal-end-side mounting portion 5.

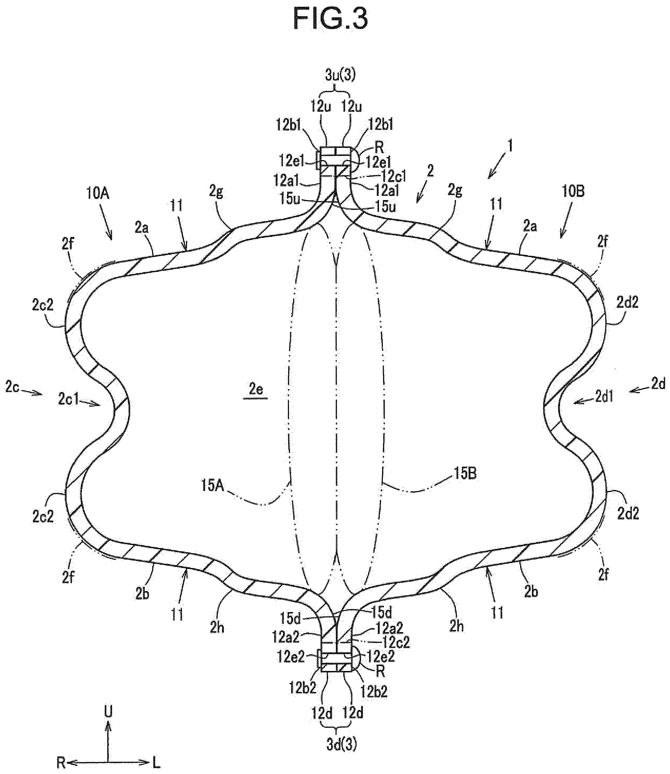

As illustrated in FIG. 3, the closed cross sectional portion 2 includes an upper wall 2a, a lower wall 2b, a lateral wall 2c on the inner side in the vehicle width direction, and a lateral wall 2d on the outer side in the vehicle width direction. A closed cross sectional space 2e surrounded by the walls 2a to 2d is formed inside the closed cross sectional portion 2 to extend in the vehicle front-rear direction. As illustrated in FIGS. 1 and 2, the closed cross sectional portion 2 is formed into a frustum shape in such a way that a size of a cross section orthogonal to the vehicle front-rear direction gradually decreases toward the vehicle front side.

As illustrated in FIG. 3, a recess portion 2c1 recessed toward the center of the closed cross sectional space 2e (toward the outer side in the vehicle width direction) is formed in an intermediate portion, in an up-down direction, of the lateral wall 2c on the inner side in the vehicle width direction to extend over the entire length of the lateral wall 2c in the vehicle front-rear direction. Bulging portions 2c2 and 2c2 bulging toward a side (toward the inner side in the vehicle width direction) opposite to the center of the closed cross sectional space 2e are formed on an upper side and a lower side of the recess portion 2c1. The recess portion 2c1, and the bulging portions 2c2 and 2c2 are formed to be smoothly continued to one another.

Likewise, a recess portion 2d1 recessed toward the center of the closed cross sectional space 2e (toward the inner side in the vehicle width direction) is formed in an intermediate portion, in an up-down direction, of the lateral wall 2d on the outer side in the vehicle width direction to extend over the entire length of the lateral wall 2d in the vehicle front-rear direction. Bulging portions 2d2 and 2d2 bulging toward a side (toward the outer side in the vehicle width direction) opposite to the center of the closed cross sectional space 2e are formed on an upper side and a lower side of the recess portion 2d1. The recess portion 2d1, and the bulging portions 2d2 and 2d2 are formed to be smoothly continued to one another.

A curved portion 2f is formed on each of corner portions where the upper wall 2a, and the lateral walls 2c and 2d intersect with each other, and on each of corner portions where the lower wall 2b, and the lateral walls 2c and 2d intersect with each other. The curved portion 2f is curved to form a part of the upper or lower bulging portions 2c2 (2d2) of the lateral wall 2c (2d).

As illustrated in FIGS. 1 to 3, the rib 3 includes the upper rib 3u protruding upward from a middle portion of the upper wall 2a in a width direction thereof (left-right direction), and the lower rib 3d (FIG. 3) protruding downward from a middle portion of the lower wall 2b in a width direction thereof (left-right direction). Both of the upper rib 3u and the lower rib 3d are formed over the entire length of the closed cross sectional portion 2 in the vehicle front-rear direction.

The upper wall 2a includes a pair of left and right upper wall curved portions 2g. The upper wall curved portion 2g is formed between the upper rib 3u, and each of the left and right corner portions (curved portions 2f and 2f). The upper wall 2a is formed in such a way that a middle area in a width direction thereof (an area close to the upper rib 3u) is higher than an area on the outer side in the width direction with respect to the upper wall curved portion 2g.

Likewise, the lower wall 2b includes a pair of left and right lower wall curved portions 2h. The lower wall curved portion 2h is formed between the lower rib 3d, and each of the left and right corner portions (curved portions 2f and 2f). The lower wall 2b is formed in such a way that a middle area in a width direction thereof (an area close to the lower rib 3d) is lower than an area on the outer side in the width direction with respect to the lower wall curved portion 2h.

The base-end-side mounting portion 4 (FIGS. 1 and 4) is formed on a base end (rear end) of the crash can 1, and is connected to the mounting plate 110 by a fastening member Tb. The distal-end-side mounting portion 5 (FIG. 4) is formed on a distal end (front end) of the crash can 1, and is connected to the bumper reinforcement 120 by a fastening member Tc.

The crash can 1 has a two-piece structure constituted of the two frame members 10A and 10B. Specifically, the crash can 1 includes the inner frame member 10A disposed on the inner side in the vehicle width direction, and the outer frame member 10B disposed on the outer side in the vehicle width direction.

As illustrated in FIGS. 3 to 5, the inner frame member 10A is a substantially hat-shaped member in a cross sectional view, which has a cross section orthogonal to the vehicle front-rear direction opened toward the outer side in the vehicle width direction, and includes an opening portion 15A in a surface on the outer side in the vehicle width direction. The outer frame member 10B is a substantially hat-shaped member in a cross sectional view, which has a cross section orthogonal to the vehicle front-rear direction opened toward the inner side in the vehicle width direction, and includes an opening portion 15B in a surface on the inner side in the vehicle width direction. Both of the inner frame member 10A and the outer frame member 10B are a one-piece mold formed of CFRP, and have an identical shape to each other. By connecting the inner frame member 10A and the outer frame member 10B to overlap each other in the vehicle width direction, the crash can 1 including the closed cross sectional portion 2, the rib 3 (3u and 3d), the base-end-side mounting portion 4, and the distal-end-side mounting portion 5 is formed.

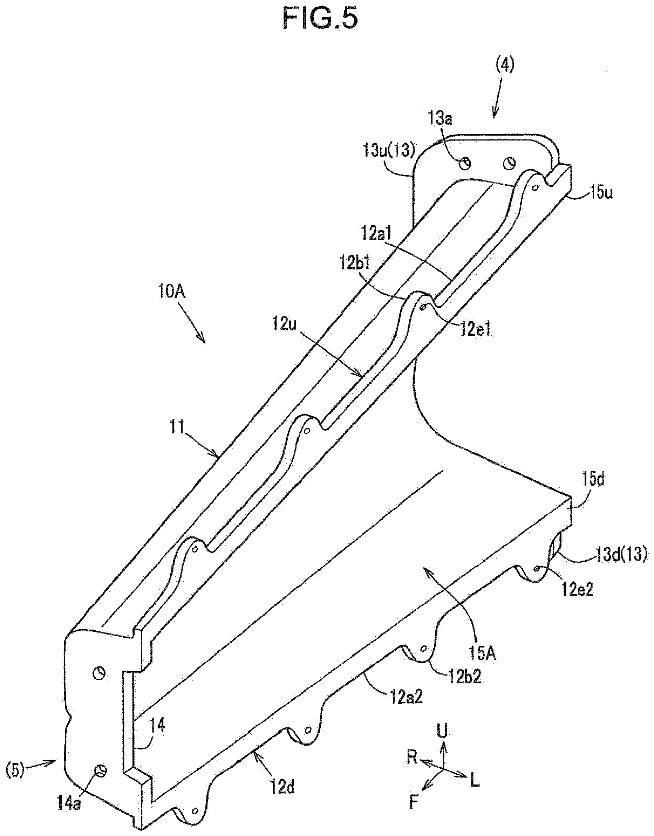

As illustrated in FIGS. 4 and 5, the inner frame member 10A integrally includes a frame body 11, an upper flange 12u, a lower flange 12d, a base-end-side flange 13 (13u and 13d), and a distal-end-side flange 14. Likewise, the outer frame member 10B integrally includes a frame body 11, an upper flange 12u, a lower flange 12d, a base-end-side flange 13 (13u and 13d), and a distal-end-side flange 14.

As illustrated in FIGS. 2 and 3, the frame body 11 of the inner frame member 10A has a shape corresponding to one-half of the closed cross sectional portion 2 on the inner side in the vehicle width direction, in other words, a substantially U-shaped cross sectional shape opened toward the outer side in the vehicle width direction. The frame body 11 of the outer frame member 10B has a shape corresponding to one-half of the closed cross sectional portion 2 on the outer side in the vehicle width direction, in other words, a substantially U-shaped cross sectional shape opened toward the inner side in the vehicle width direction.

As described above, since the inner frame member 10A and the outer frame member 10B have an identical shape to each other, in the following, unless otherwise specifically mentioned, a configuration of the inner frame member 10A is described.

As illustrated in FIGS. 3 to 5, the frame body 11 of the inner frame member 10A includes, on an end thereof on the outer side in the vehicle width direction, a pair of upper and lower opening edges 15u and 15d for defining an upper periphery and a lower periphery of the opening portion 15A. The upper flange 12u is formed to protrude upward from the upper opening edge 15u, and the lower flange 12d is formed to protrude downward from the lower opening edge 15d.

As illustrated in FIGS. 1 to 5, the upper flange 12u includes a flange body 12a1 extending in the vehicle front-rear direction along the upper opening edge 15u, and a plurality of fastening portions 12b1 protruding upward from the flange body 12a1. The flange body 12a1 is formed into a flat plate shape having a substantially fixed width in the up-down direction. The plurality of the fastening portions 12b1 are formed to protrude upward from a plurality of positions on an upper edge of the flange body 12a1 in the front-rear direction. Each of the fastening portions 12b 1 is connected by a fastening member (a rivet R to be described later) to a counterpart fastening portion, in other words, the fastening portion 12b1 formed on the upper flange 12u of the outer frame member 10B.

As illustrated in FIGS. 4 and 5, the lower flange 12d includes a flange body 12a2 extending in the vehicle front-rear direction along the lower opening edge 15d, and a plurality of fastening portions 12b2 protruding downward from the flange body 12a2. The flange body 12a2 is formed into a flat plate shape having a substantially fixed width in the up-down direction. The plurality of the fastening portions 12b2 are formed to protrude downward from a plurality of positions on a lower edge of the flange body 12a2 in the front-rear direction. Each of the fastening portions 12b2 is connected by a fastening member (a rivet R to be described later) to a counterpart fastening portion, in other words, the fastening portion 12b2 formed on the lower flange 12d of the outer frame member 10B.

Each of the flange bodies 12a1 and 12a2 of the upper flange 12u and the lower flange 12d is formed over the entire length of the inner frame member 10A in the front-rear direction. A protrusion amount of each of the flange bodies 12a1 and 12a2 in the up-down direction is set to a protrusion amount capable of securing a strength of the rib 3 formed by connecting the flanges 12u and 12d of the inner frame member 10A and the outer frame member 10B, which is equal to or larger than a required level.

As illustrated in FIG. 3, a rivet hole 12e1 (corresponding to a through-hole of the present invention) passing through in the vehicle width direction is formed in the fastening portion 12b1 of the upper flange 12u. A rivet R for use in fastening the upper flange 12u to a counterpart portion (upper flange 12u of the outer frame member 10B) is received in the rivet hole 12e1.

Likewise, a rivet hole 12e2 (corresponding to a through-hole of the present invention) passing through in the vehicle width direction is formed in the fastening portion 12b2 of the lower flange 12d. A rivet R for use in fastening the lower flange 12d to a counterpart portion (lower flange 12d of the outer frame member 10B) is received in the rivet hole 12e2.

As illustrated in FIGS. 1 to 5, in the present embodiment, the four fastening portions 12b1 are formed on the upper flange 12u, and the four fastening portions 12b2 are formed on the lower flange 12d. The four fastening portions 12b1 and the four fastening portions 12b2 are respectively arranged to align in the vehicle front-rear direction at a predetermined interval.

As illustrated in FIG. 4, the rivet holes 12e1 of the upper flange 12u are formed only in the fastening portions 12b1 in such a way that a part thereof does not overlap the flange body 12a1 in a side view (in such a way as not to cut out the flange body 12a1). In other words, the rivet holes 12e1 are formed exclusively in an upper area with respect to a boundary 12c1 in such a way that the rivet holes 12e1 do not span over the boundary 12c1 between the flange body 12a1 and the fastening portions 12b1 (e.g., see an enlarged area of a portion X in FIG. 4).

Likewise, the rivet holes 12e2 of the lower flange 12d are formed only in the fastening portions 12b2 in such a way that a part thereof does not overlap the flange body 12a2 in a side view (in such a way as not to cut out the flange body 12a2). In other words, the rivet holes 12e2 are formed exclusively in a lower area with respect to a boundary 12c2 in such a way that the rivet holes 12e2 do not span over the boundary 12c2 between the flange body 12a2 and the fastening portions 12b2.

As illustrated in FIGS. 1 and 2, the base-end-side flange 13 includes an upper base-end-side flange 13u protruding upward from an upper edge of a base end (rear end) of the frame body 11, and a lower base-end-side flange 13d protruding downward from a lower edge of a base end (rear end) of the frame body 11. The upper and lower base-end-side flanges 13u and 13d are formed to be symmetrical to each other in the up-down direction.

As illustrated in FIGS. 1, 4, and 5, each of the upper and lower base-end-side flanges 13u and 13d includes a plurality of mounting holes 13a passing through in the vehicle front-rear direction. On the other hand, as illustrated in FIGS. 2 and 4, the mounting plate 110 includes a plurality of mounting holes 110b passing through in the vehicle front-rear direction at positions corresponding to the mounting holes 13a of the base-end-side flanges 13u and 13d in a front view (view in the vehicle front-rear direction).

As illustrated in FIGS. 4 and 5, the distal-end-side flange 14 is formed as a front wall for substantially closing, from the front side, a closed cross sectional space (FIG. 3) at a distal end (front end) of the frame body 11.

The distal-end-side flange 14 includes a plurality of (in this example, two each on the upper side and the lower side) mounting holes 14a passing through in the vehicle front-rear direction. On the other hand, as illustrated in FIG. 4, a rear wall 121 of the bumper reinforcement 120 includes a plurality of (two) mounting holes 121b passing through in the vehicle front-rear direction at positions corresponding to the mounting holes 14a of the distal-end-side flange 14 in a front view (view in the vehicle front-rear direction).

The inner frame member 10A and the outer frame member 10B described above are assembled as follows. First, the inner frame member 10A and the outer frame member 10B are disposed opposingly in a posture that the inner frame member 10A and the outer frame member 10B are symmetrical (planarly symmetrical) with respect to a plane orthogonal to the vehicle width direction, and the flanges 12u and 12d of the inner frame member 10A and the flanges 12u and 12d of the outer frame member 10B are overlapped with each other in the vehicle width direction. At this occasion, the frame members 10A and 10B are positioned to each other in such a way that the rivet holes 12e1 and 12e2 of the flanges 12u and 12d of the inner frame member 10A, and the rivet holes 12e1 and 12e2 of the flanges 12u and 12d of the outer frame member 10B are aligned in the vehicle width direction. Further, in this state, the rivets R are respectively inserted in the rivet holes 12e1 and 12e2 of the frame member 10A and 10B, and caulking processing is applied to the inserted rivets R.

By assembling the inner frame member 10A and the outer frame member 10B as described above, the hollow tubular-shaped crash can 1 extending in the vehicle front-rear direction, in other words, the crash can 1 including the closed cross sectional portion 2, the rib 3 (3u and 3d), the base-end-side mounting portion 4, and the distal-end-side mounting portion 5 is formed.

Specifically, the closed cross sectional portion 2 is constituted of the frame body 11 of the inner frame member 10A, and the frame body 11 of the outer frame member 10B. The upper rib 3u is constituted of the upper flange 12u of the inner frame member 10A, and the upper flange 12u of the outer frame member 10B. The lower rib 3d is constituted of the lower flange 12d of the inner frame member 10A, and the lower flange 12d of the outer frame member 10B. The base-end-side mounting portion 4 is constituted of the base-end-side flanges 13u and 13d of the inner frame member 10A, and the base-end-side flanges 13u and 13d of the outer frame member 10B. The distal-end-side mounting portion 5 is constituted of the distal-end-side flange 14 of the inner frame member 10A, and the distal-end-side flange 14 of the outer frame member 10B.

As described above, when assembling of the crash can 1 is completed, the crash can 1 is connected to the mounting plate 110 by using the fasting member Tb including a bolt and a nut (see FIGS. 1, 2, and 4). Specifically, the base-end-side mounting portion 4 of the crash can 1 (base-end-side flanges 13u and 13d of the inner frame member 10A and the outer frame member 10B) are abutted against a front surface of the mounting plate 110, and in this state, a bolt is inserted in the mounting hole 13a of the base-end-side mounting portion 4 and in the mounting hole 110b of the mounting plate 110, and a nut is screwed with the bolt. Thus, a base end (rear end) of the crash can 1 is connected to the mounting plate 110. In other words, a base end of the crash can 1 is connected to a front end of the front side frame 100 via the mounting plate 110.

Since a connection structure as described above increases a connection strength between a base end (rear end) of the crash can 1 and the front side frame 100, this contributes to suppressing bending of the base end of the crash can 1 at a time of vehicle collision. For example, when collision (hereinafter, referred to as "oblique collision from upward or oblique collision from downward") occurs in which an input direction of a collision load input from the vehicle front side is inclined upward or downward with respect to the vehicle front-rear direction (longitudinal direction of the crash can 1), a bending stress acting on the crash can 1 is maximum at a base end of the crash can 1. Since the above-described connection structure reinforces a base end of the crash can 1 on which a maximum bending stress acts as described above, the connection structure is advantageous in suppressing bending deformation of the base end.

As illustrated in FIG. 4, the crash can 1 is connected to the rear wall 121 of the bumper reinforcement 120 by using the fastening member Tc including a bolt and a nut. Specifically, the distal-end-side mounting portion 5 (distal-end-side flanges 14 of the inner frame member 10A and the outer frame member 10B) of the crash can 1 is abutted against the rear wall 121 of the bumper reinforcement 120, and in this state, a bolt is received in the mounting hole 14a of the distal-end-side mounting portion 5 and in the mounting hole 121b of the bumper reinforcement 120, and a nut is screwed with the bolt. Thus, a distal end (front end) of the crash can 1 is connected to the rear wall 121 of the bumper reinforcement 120.

As described above, an impact absorbing structure according to the present embodiment includes a crash can 1 constituted by combining the inner frame member 10A and the outer frame member 10B formed of carbon fiber reinforced resin (CFRP). The crash can 1 includes the closed cross sectional portion 2 extending in the vehicle front-rear direction, and the rib 3 (3u and 3d) protruding upward and downward from the closed cross sectional portion 2 and extending in the vehicle front-rear direction (see FIGS. 1 to 3).

In this configuration, since a unit having a closed cross sectional structure including the rib 3 extending in the vehicle front-rear direction is employed as the crash can 1 for impact absorbing, even when the crash can 1 is formed of CFRP being a resin material, it is possible to enhance rigidity of the crash can 1 against a bending stress acting at a time of oblique collision from upward or oblique collision from downward, in other words, rigidity against a bending stress generated by a collision load in an oblique direction inclined upward or downward with respect to the vehicle front-rear direction (longitudinal direction of the crash can 1). Thus, it is possible to suppress bending of an intermediate portion of the crash can 1 in the front-rear direction due to a bending stress at a time of oblique collision from upward or oblique collision from downward as described above, while remarkably reducing the weight of the crash can 1.

Further, in the embodiment, the inner frame member 10A and the outer frame member 10B have an identical shape to each other, and are formed into a substantially hat shape, which has a cross section orthogonal to the vehicle front-rear direction opened toward the outer side or the inner side in the vehicle width direction. Further, by connecting the inner frame member 10A and the outer frame member 10B in a posture that the opening portions 15A and 15B of the inner frame member 10A and the outer frame member 10B face each other, the crash can 1 including the closed cross sectional portion 2 and the rib 3 (3u and 3d) is formed.

In this configuration, since the inner frame member 10A and the outer frame member 10B have an identical shape to each other, it is possible to use a mold of a same shape in forming the frame members 10A and 10B of CFRP. Therefore, it is possible to reduce a ratio of cost of a mold, consequently, reduce the production cost of the crash can 1.

Further, since the crash can 1 is formed by assembling the inner frame member 10A and the outer frame member 10B, each of which has an opened cross section (of a substantially hat shape) opened in the vehicle width direction, it is more easily to form even the crash can 1 including the closed cross sectional portion 2 of CFRP.

Furthermore, in the present embodiment, each of the inner frame member 10A and the outer frame member 10B includes the frame body 11 opened toward the outer side or the inner side in the vehicle width direction, the upper flange 12u protruding upward from the upper opening edge 15u of the frame body 11, and the lower flange 12d protruding downward from the lower opening edge 15d of the frame body 11. The rib 3 includes the upper rib 3u formed by connecting the upper flanges 12u of the inner frame member 10A and the outer frame member 10B, and the lower rib 3d formed by connecting the lower flanges 12d of the inner frame member 10A and the outer frame member 10B.

In this way, when the ribs 3u and 3d are respectively formed on the upper side and the lower side of the closed cross sectional portion 2 by using the upper and lower flanges 12u and 12d of the inner frame member 10A, and the upper and lower flanges 12u and 12d of the outer frame member 10B, it is possible to sufficiently suppress, by the ribs 3u and 3d, bending of an intermediate portion of the crash can 1 due to a bending stress acting at a time of oblique collision from upward or oblique collision from downward, while forming the crash can 1 (frame members 10A and 10B) at a low cost as described above.

Particularly, in the embodiment in which the inner frame member 10A and the outer frame member 10B have an identical shape to each other, it is possible to form the upper rib 3u and the lower rib 3d at a middle portion of the upper wall 2a and the lower wall 2b of the closed cross sectional portion 2 in the vehicle width direction in a state that the frame members 10A and 10B are assembled (see FIG. 3).

Thus, it is possible to securely receive a bending stress acting on the crash can 1 at a time of oblique collision from upward or oblique collision from downward by the rib 3 (3u and 3d) located at a middle portion of the crash can 1 in the vehicle width direction, and sufficiently acquire an effect of suppressing bending deformation by the bending stress.

Further, in the embodiment, the upper flange 12u (lower flange 12d) includes the flange body 12a1 (12a2) protruding upward (downward) from the opening edge 15u (15d) of the frame body 11 and extending in the front-rear direction; and the fastening portion 12b1 (12b2) protruding upward or downward from a part of the flange body 12a1 (12a2) in the front-rear direction. The rivet hole 12e1 (12e2) constituted of a through-hole for receiving the rivet R as a fastening member is formed in the fastening portion 12b1 (12b2), and the rivet hole 12e1 (12e2) is formed in such a way as not to span over the boundary 12c1 (12c2) between the flange body 12a1 (12a2) and the fastening portion 12b1 (12b2) (FIG. 4, particularly see the enlarged area of the portion X in FIG. 4).

In this configuration, it is possible to sufficiently acquire an effect of enhancing rigidity by the rib 3. For example, it is assumed that the rivet hole 12b1 (12b2) is formed in an area spanning over the boundary 12c1 (12c2) between the flange body 12a1 (12a2) and the fastening portion 12b1 (12b2), in other words, the rivet hole 12e1 (12e2) is formed in an area where the rivet hole partially overlaps the flange body 12a1 (12a2). Then, the effect of enhancing rigidity by the rib 3 may be lowered below a required level, since a protrusion height of the flange body 12a1 (12a2) decreases at a position where the rivet hole 12e1 (12e2) is formed. At this occasion, when a bending stress acts on the crash can 1 by oblique collision from upward or oblique collision from downward, the rivet hole 12e1 (12e2) may induce bending deformation of the crash can 1 resulting from deformation of the rib 3.

In contrast, as exemplified in the embodiment, when the rivet hole 12e1 (12e2) is formed exclusively in the fastening portion 12b1 (12b2) in such a way as not to span over the boundary 12c1 (12c2), a protrusion height of the flange body 12a1 (12a2) does not decrease even at a position where the rivet hole 12e1 (12e2) is formed. Therefore, it is possible to secure a protrusion height necessary as the rib 3 at any position of the crash can 1 in the front-rear direction, and sufficiently acquire an effect of suppressing bending deformation of the crash can 1.

Further, in the embodiment, the upper flange 12u (lower flange 12d) includes a plurality of the fastening portions 12b1 (12b2). The plurality of the fastening portions 12b1 (12b2) are formed to protrude from a plurality of positions of the flange body 12a1 (12a2) in the front-rear direction, and away from one another in the front-rear direction (see FIGS. 1 to 5).

In this configuration, since it is possible to form the fastening portions 12b1 (12b2) exclusively at a position where fastening by the rivet R is necessary, it is possible to further reduce the weight of the crash can 1 without uselessly increasing the area of the rib 3 in a side view.

### <Overview of Embodiment>

The following is an overview of the embodiment.

An impact absorbing structure for a vehicle according to the embodiment includes a frame member formed of a resin material. The frame member includes a closed cross sectional portion extending in a vehicle front-rear direction, and a rib protruding at least either upward or downward from the closed cross sectional portion and extending in the vehicle front-rear direction.

In this configuration, a unit having a closed cross sectional structure including the rib extending in the vehicle front-rear direction is used as a frame member for impact absorbing. Therefore, even when the frame member is formed of a resin material, it is possible to enhance rigidity of the frame member against a bending stress acting at a time of oblique collision from upward or oblique collision from downward, in other words, rigidity against a bending stress generated due to a collision load in an oblique direction inclined upward or downward with respect to the vehicle front-rear direction (longitudinal direction of the frame member). Thus, it is possible to suppress bending of an intermediate portion of the frame member in the front-rear direction due to a bending stress at a time of oblique collision from upward or oblique collision from downward as described above, while remarkably reducing the weight of the frame member.

According to the invention, the frame member includes an inner frame member, and an outer frame member connected to the inner frame member from an outer side in a vehicle width direction. The inner frame member and the outer frame member have an identical shape to each other, and are formed to have a cross section orthogonal to the vehicle front-rear direction opened toward the outer side or an inner side in the vehicle width direction. The inner frame member and the outer frame member are connected in a posture that an opening portion of the inner frame member and an opening portion of the outer frame member face each other, whereby the frame member including the closed cross sectional portion and the rib is formed.

Since the inner frame member and the outer frame member have an identical shape to each other, it is possible to use a mold of a same shape in forming each of the frame members of a resin material. Therefore, it is possible to reduce a ratio of cost of a mold, consequently, reduce the production cost of the frame member.

Further, since the frame member is formed by assembling the inner frame member and the outer frame member, each of which has an opened cross section opened in the vehicle width direction, it is more easy to form even a frame member having a closed cross section of a resin material.

According to the invention, each of the inner frame member and the outer frame member includes a frame body opened toward the outer side or the inner side in the vehicle width direction, an upper flange protruding upward from an upper opening edge of the frame body, and a lower flange protruding downward from a lower opening edge of the frame body. The rib includes an upper rib formed by connecting the upper flange of the inner frame member and the upper flange of the outer frame member, and a lower rib formed by connecting the lower flange of the inner frame member and the lower flange of the outer frame member.

In this way, when a rib is formed on each of the upper side and the lower side of a closed cross sectional portion by using the upper and lower flanges of the inner frame member, and the upper and lower flanges of the outer frame member, it is possible to sufficiently suppress, by the ribs, bending of an intermediate portion of the frame member due to a bending stress acting at a time of oblique collision from upward or oblique collision from downward, while forming the frame member at a low cost as described above.

According to the invention, each of the upper flange and the lower flange includes a flange body protruding upward or downward from an opening edge of the frame body and extending in a front-rear direction, and a fastening portion protruding upward or downward from a part of the flange body in the front-rear direction. A through-hole for receiving a fastening member is formed in the fastening portion. The through-hole is formed in such a way as not to span over a boundary between the flange body and the fastening portion.

In this way, when the through-hole is formed exclusively on the fastening portion in such a way as not to span over the boundary between the flange body and the fastening portion, it is possible to sufficiently acquire an effect of suppressing bending deformation of the frame member, without a likelihood that the through-hole induces deformation of the rib at a time of oblique collision from upward or oblique collision from downward.

In the above configuration, more preferably, each of the upper flange and the lower flange may include a plurality of the fastening portions. The plurality of the fastening portions may be formed to protrude from a plurality of positions of the flange body in the front-rear direction and away from one another in the front-rear direction.

In this configuration, since the fastening portions can be formed exclusively at a position where fastening by the fastening member is necessary, it is possible to further reduce the weight of the frame member without uselessly increasing the area of the rib in a side view.

The frame member may constitute a crash can disposed between a front side frame and a bumper reinforcement on a front portion of the vehicle.

In this configuration, it is possible to suppress bending deformation of the crash can at a time of oblique collision from upward or oblique collision from downward, while reducing the weight of the front portion of the vehicle.

## Claims

1. An impact absorbing structure for a vehicle including a frame member (1) formed of a resin material, wherein
the frame member (1) includes
a closed cross sectional portion (2) extending in a vehicle front-rear direction, and
a rib (3) protruding at least either upward or downward from the closed cross sectional portion (2) and extending in the vehicle front-rear direction, wherein
the frame member (1) includes an inner frame member (10A), and an outer frame member (10B) connected to the inner frame member (10A) from an outer side in a vehicle width direction,
the inner frame member (10A) and the outer frame member (10B) have an identical shape to each other, and are formed to have a cross section orthogonal to the vehicle front-rear direction opened toward the outer side or an inner side in the vehicle width direction,
the inner frame member (10A) and the outer frame member (10B) are connected in a posture that an opening portion (15A) of the inner frame member (10A) and an opening portion (15B) of the outer frame member (10B) face each other, whereby the frame member (1) including the closed cross sectional portion (2) and the rib (3) is formed, wherein
each of the inner frame member (10A) and the outer frame member (10B) includes a frame body (11) opened toward the outer side or the inner side in the vehicle width direction, an upper flange (12u) protruding upward from an upper opening edge (15u) of the frame body (11), and a lower flange (12d) protruding downward from a lower opening edge (15d) of the frame body (11),
the rib (3) includes an upper rib (3u) formed by connecting the upper flange (12u) of the inner frame member (10A) and the upper flange (12u) of the outer frame member (10B), and a lower rib (3d) formed by connecting the lower flange (12d) of the inner frame member (10A) and the lower flange (12d) of the outer frame member (10B), wherein
each of the upper flange (12u) and the lower flange (12d) includes a flange body (12a1 or 12a2) protruding upward or downward from an opening edge (15u or 15d) of the frame body (11) and extending in a front-rear direction,
**characterized in**
**that** each of the upper flange (12u) and the lower flange (12d) includes a fastening portion (12b1 or 12b2) protruding upward or downward from a part of the flange body (12a1 or 12a2) in the front-rear direction,
a through-hole (12e1 or 12e2) for receiving a fastening member (R) is formed in the fastening portion (12b1 or 12b2), and
the through-hole (12e1 or 12e2) is formed in such a way as not to span over a boundary (12c1 or 12c2) between the flange body (12a1 or 12a2) and the fastening portion (12b1 or 12b2).

2. The impact absorbing structure for the vehicle according to claim 1, wherein
each of the upper flange (12u) and the lower flange (12d) includes a plurality of the fastening portions (12b1 or 12b2), and
the plurality of the fastening portions (12b1 or 12b2) are formed to protrude from a plurality of positions of the flange body (12a1 or 12a2) in the front-rear direction and away from one another in the front-rear direction.

3. The impact absorbing structure for the vehicle according to claim 1 or 2, wherein
the frame member is a crash can (1) disposed between a front side frame (100) and a bumper reinforcement (120) on a front portion of the vehicle.

## Patentansprüche

1. Stoßdämpferanordnung für ein Fahrzeug, die ein aus einem Harzmaterial ausgebildetes Rahmenelement (1) aufweist, wobei
das Rahmenelement (1) aufweist:
einen geschlossenen Querschnittsabschnitt (2), der sich in einer Front-Heck-Richtung des Fahrzeugs erstreckt, und
eine Rippe (3), die von dem geschlossenen Querschnittsabschnitt (2) wenigstens entweder nach oben oder nach unten ragt und sich in der Front-Heck-Richtung des Fahrzeugs erstreckt, wobei
das Rahmenelement (1) ein Innenrahmenelement (10A) und ein Außenrahmenelement (10B), das von einer Außenseite in einer Fahrzeugbreitenrichtung mit dem Innenrahmenelement (10A) verbunden ist, aufweist,
das Innenrahmenelement (10A) und das Außenrahmenelement (10B) eine einander identische Form haben und ausgebildet sind, einen Querschnitt senkrecht zur Front-Heck-Richtung des Fahrzeugs, der in der Fahrzeugbreitenrichtung zu der Außenseite oder einer Innenseite hin geöffnet ist, aufzuweisen,
das Innenrahmenelement (10A) und das Außenrahmenelement (10B) in einer Stellung, bei der ein Öffnungsabschnitt (15A) des Innenrahmenelements (10A) und ein Öffnungsabschnitt (15B) des Außenrahmenelements (10B) einander zugewandt sind, miteinander verbunden sind, wodurch das Rahmenelement (1), das den geschlossenen Querschnittsabschnitt (2) und die Rippe (3) aufweist, ausgebildet wird, wobei
sowohl das Innenrahmenelement (10A) als auch das Außenrahmenelement (10B) Folgendes aufweist: einen Rahmenkörper (11), der in der Fahrzeugbreitenrichtung zu der Außenseite oder der Innenseite hin geöffnet ist, einen oberen Flansch (12u), der von einer oberen Öffnungskante (15u) des Rahmenkörpers (11) nach oben ragt, und einen unteren Flansch (12d), der von einer unteren Öffnungskante (15d) des Rahmenkörpers (11) nach unten ragt,
die Rippe (3) Folgendes aufweist: eine obere Rippe (3u), die durch Verbinden des oberen Flansches (12u) des Innenrahmenelements (10A) und des oberen Flansches (12u) des Außenrahmenelements (10B) ausgebildet wird, und eine untere Rippe (3d), die durch Verbinden des unteren Flansches (12d) des Innenrahmenelements (10A) und des unteren Flansches (12d) des Außenrahmenelements (10B) ausgebildet wird, wobei
sowohl der obere Flansch (12u) als auch der untere Flansch (12d) einen Flanschkörper (12a1 oder 12a2) aufweist, der von einer Öffnungskante (15u oder 15d) des Rahmenkörpers (11) nach oben oder nach unten ragt und sich in einer Front-Heck-Richtung erstreckt,
**dadurch gekennzeichnet,**
**dass** sowohl der obere Flansch (12u) als auch der untere Flansch (12d) einen Befestigungsabschnitt (12b1 oder 12b2) aufweist, der von einem Teil des Flanschkörpers (12a1 oder 12a2) in der Front-Heck-Richtung nach oben oder nach unten ragt,
ein Durchgangsloch (12e1 oder 12e2) zum Aufnehmen eines Befestigungselements (R) in dem Befestigungsabschnitt (12b1 oder 12b2) ausgebildet ist und
das Durchgangsloch (12e1 oder 12e2) derart ausgebildet ist, dass es keine Begrenzung (12c1 oder 12c2) zwischen dem Flanschkörper (12a1 oder 12a2) und dem Befestigungsabschnitt (12b1 oder 12b2) überspannt.

2. Stoßdämpferanordnung für das Fahrzeug nach Anspruch 1, wobei
sowohl der obere Flansch (12u) als auch der untere Flansch (12d) mehrere der Befestigungsabschnitte (12b1 oder 12b2) aufweist und
die mehreren der Befestigungsabschnitte (12b1 oder 12b2) ausgebildet sind, um in der Front-Heck-Richtung von mehreren Positionen des Flanschkörpers (12a1 oder 12a2) vorzuragen und in der Front-Heck-Richtung voneinander weg zu ragen.

3. Stoßdämpferanordnung für das Fahrzeug nach Anspruch 1 oder 2, wobei
das Rahmenelement eine Crashbox (1) ist, die zwischen einem Frontseitenrahmen (100) und einer Stoßstangenverstärkung (120) auf einem Frontabschnitt des Fahrzeugs angeordnet ist.

## Revendications

1. Structure d'absorption des chocs destinée à un véhicule, la structure comprenant un élément châssis (1) formé à partir d'un matériau de résine, et dans laquelle
l'élément châssis (1) comprend
une partie à section transversale fermée (2) s'étendant dans une direction avant-arrière du véhicule, et
une nervure (3) faisant saillie au moins vers le haut ou vers le bas à partir de la partie à section transversale fermée (2) et s'étendant dans la direction avant-arrière du véhicule,
l'élément châssis (1) comprend un élément châssis interne (10A), et un élément châssis externe (10B) relié à l'élément châssis interne (10A) à partir d'un côté externe dans une direction de la largeur du véhicule,
l'élément châssis interne (10A) et l'élément châssis externe (10B) présentent une forme identique l'un par rapport à l'autre, et sont façonnés pour avoir une section transversale orthogonale à la direction avant-arrière du véhicule, ouverte vers le côté externe ou vers un côté interne dans la direction de la largeur du véhicule,
l'élément châssis interne (10A) et l'élément châssis externe (10B) sont reliés dans une position telle qu'une partie d'ouverture (15A) de l'élément châssis interne (10A), et une partie d'ouverture (15B) de l'élément châssis externe (10B), soient orientées l'une vers l'autre, ce qui permet de former l'élément châssis (1) comprenant la partie à section transversale fermée (2) et la nervure (3),
chaque élément, parmi l'élément châssis interne (10A) et l'élément châssis externe (10B), comprend un corps (11) de châssis ouvert vers le côté externe ou vers le côté interne dans la direction de la largeur du véhicule, une bride supérieure (12u) faisant saillie vers le haut à partir d'un bord d'ouverture supérieur (15u) du corps (11) de châssis, et une bride inférieure (12d) faisant saillie vers le bas à partir d'un bord d'ouverture inférieur (15d) du corps (11) de châssis,
la nervure (3) comprend une nervure supérieure (3u) formée au moyen de la liaison de la bride supérieure (12u) de l'élément châssis interne (10A) et de la bride supérieure (12u) de l'élément châssis externe (10B), et une nervure inférieure (3d) formée au moyen de la liaison de la bride inférieure (12d) de l'élément châssis interne (10A) et de la bride inférieure (12d) de l'élément châssis externe (10B),
chaque bride, parmi la bride supérieure (12u) et la bride inférieure (12d), comprend un corps (12a1 ou 12a2) de bride faisant saillie vers le haut ou vers le bas à partir d'un bord d'ouverture (15u ou 15d) du corps (11) de bride et s'étendant dans une direction avant-arrière,
**caractérisée en ce que**
chaque bride, parmi la bride supérieure (12u) et la bride inférieure (12d), comprend une partie de fixation (12b1 ou 12b2) faisant saillie vers le haut ou vers le bas à partir d'une partie du corps (12a1 ou 12a2) de bride dans la direction avant-arrière,
un trou traversant (12e1 ou 12e2), permettant de recevoir un élément de fixation (R), est formé dans la partie de fixation (12b1 ou 12b2), et
le trou traversant (12e1 ou 12e2) est formé de manière à ne pas s'étendre sur une limite (12c1 ou 12c2) entre le corps (12a1 ou 12a2) de bride et la partie de fixation (12b1 ou 12b2).

2. La structure d'absorption des chocs destinée à un véhicule selon la revendication 1, dans laquelle
chaque bride, parmi la bride supérieure (12u) et la bride inférieure (12d), comprend une pluralité des parties de fixation (12b1 ou 12b2), et
la pluralité des parties de fixation (12b1 ou 12b2) est formée pour faire saillie à partir d'une pluralité de positions du corps (12a1 ou 12a2) de bride dans la direction avant-arrière et à l'opposé les unes des autres dans la direction avant-arrière.

3. La structure d'absorption des chocs destinée à un véhicule selon les revendications 1 ou 2, dans laquelle
l'élément châssis est une boîte métallique tampon (1) disposée entre un châssis côté avant (100) et un renforcement de pare-chocs (120) sur une partie avant du véhicule.
